# EUROPEAN PATENT APPLICATION

(11) **EP 4 818 372 A1**
(43) Date of publication of application: **07.10.2026**
(21) Application number: 26159595.3
(22) Date of filing: 19.02.2026
(51) Int. Cl.: C25B 9/60, C25B 9/19, C25B 9/77, C25B 15/08, H01M 8/026, C25B 1/04

(54) **SEPARATOR AND APPARATUS**

(30) Priority: 19.03.2025 JP 2025046098
(71) Applicant: KABUSHIKI KAISHA TOSHIBA, Kawasaki-shi, Kanagawa 212-0013 (JP)
(72) Inventor: HONGO, Takuya, Kawasaki-shi, Kanagawa (JP)
(74) Representative: Hoffmann Eitle

(57) **Abstract**

A separator includes a frame; and a flow-channel wall on the frame, the flow-channel wall defining a supply-area, an exhaust-area, and a groove-area, the groove-area comprising a first groove group between the supply-area and the exhaust-area, the first groove group comprising (A) a first supply-side connection groove in which the side of the supply-area has a larger opening than the side of the exhaust-area; and (B) a first exhaust-side connection groove in which the side of the exhaust-area has a larger opening than the side of the supply-area. The flow-channel wall is provided at the exhaust-area side end of the first supply-side connection groove.

## Description

### FIELD

Embodiments described herein relate generally to a separator, an electrochemical cell, a stack and an apparatus.

### BACKGROUND

In recent years, expectations for renewable energy have been increasing. Examples of renewable energy include solar power generation, hydroelectric power generation, wind power generation, and geothermal power generation.

Furthermore, as efforts to decarbonize, power generation using fuel cells and energy conversion by electrolysis are attracting attention.

### BRIEF DESCRIPTION OF THE DRAWINGS

FIG. 1 is a schematic diagram of a separator according to an embodiment;
FIG. 2 is a schematic diagram of a separator according to an embodiment;
FIG. 3 is a schematic diagram of a separator according to an embodiment;
FIG. 4 is a schematic cross-sectional diagram of a separator according to an embodiment;
FIG. 5 is a schematic cross-sectional diagram of a separator according to an embodiment;
FIG. 6 is a schematic cross-sectional diagram of a separator according to an embodiment;
FIG. 7 is a schematic cross-sectional diagram of a separator according to an embodiment;
FIG. 8 is a schematic cross-sectional diagram of a separator according to an embodiment;
FIG. 9 is a schematic perspective diagram of a separator according to an embodiment;
FIG. 10 is a schematic perspective diagram of a separator according to an embodiment;
FIG. 11 is a schematic perspective diagram of a separator according to an embodiment;
FIG. 12 is a schematic cross-sectional diagram of a separator according to an embodiment;
FIG. 13 is a schematic cross-sectional diagram of a separator according to an embodiment;
FIG. 14 is a schematic perspective diagram of a separator according to an embodiment;
FIG. 15 is a schematic diagram of a separator according to an embodiment;
FIG. 16 is a schematic diagram of a separator according to an embodiment;
FIG. 17 is a schematic diagram of a separator unit according to an embodiment;
FIG. 18 is a schematic diagram of an electrochemical cell according to an embodiment;
FIG. 19 is a schematic diagram of a stack according to an embodiment; and
FIG. 20 is a schematic diagram of an apparatus according to an embodiment.

### DETAILED DESCRIPTION

A separator according to an embodiment comprises a frame; and a flow-channel wall on the frame, the flow-channel wall defining a supply-area, an exhaust-area, and a groove-area, the groove area comprising a first groove group between the supply-area and the exhaust-area, the first groove group comprising (A) a first supply-side connection groove in which the side of the supply-area has a larger opening than the side of the exhaust-area; and (B) a first exhaust-side connection groove in which the side of the exhaust-area has a larger opening than the side of the supply-area. The flow-channel wall is provided at the exhaust-area side end of the first supply-side connection groove. The separator satisfies at least one of the following: (i) the height of the end portion of the flow-channel wall on the exhaust-area side of the first supply-side connection groove is lower than the height of a portion of the flow-channel wall that is located between the first supply-side connection groove and the first exhaust-side connection groove; (ii) a thickness of the end portion of the flow-channel wall on the exhaust-area side of the first supply-side connection groove is thinner than a thickness of the portion of the flow-channel wall which is located between the first supply-side connection groove and the first exhaust-side connection groove; (iii) the frame on the end side of the first supply-side connection groove on the supply-area side is elevated so that a depth at the end portion of the first supply-side connection groove on the exhaust-area side is shallower than a depth at the end portion of the first supply-side connection groove on the supply-area side; (iv) the flow-channel wall located on the end portion of the first supply-side connection groove on the exhaust-area side, has a through hole; and (v) the flow-channel wall located on the end portion of the first supply-side connection groove on the exhaust-area side, is split.

An electrochemical cell according to an embodiment comprises a first electrode which comprises a support; a second electrode including a support; a diaphragm between the first electrode and the second electrode; a first separator connected to the first electrode; and a second separator connected to the second electrode. The first separator or/and the second separator is the separator according to an embodiment. An apparatus according to an embodiment that is an electrolyzing apparatus or a fuel cell comprises the electrochemical cell according to an embodiment.

The physical property values in the specification are values at a temperature of 25 [°C] and a pressure of 1 [atm]. The thickness of each member is the average value of the distance in the stacking direction.

### (FIRST EMBODIMENT)

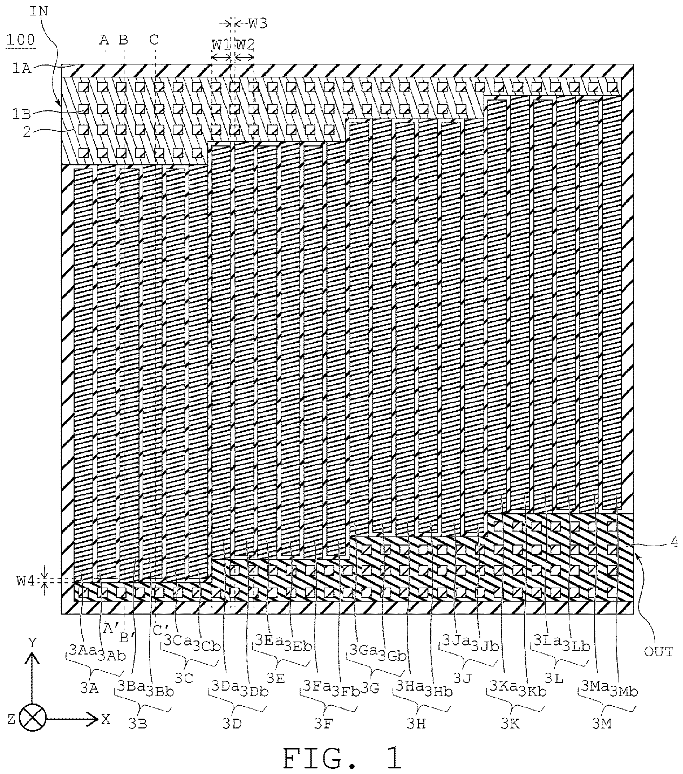

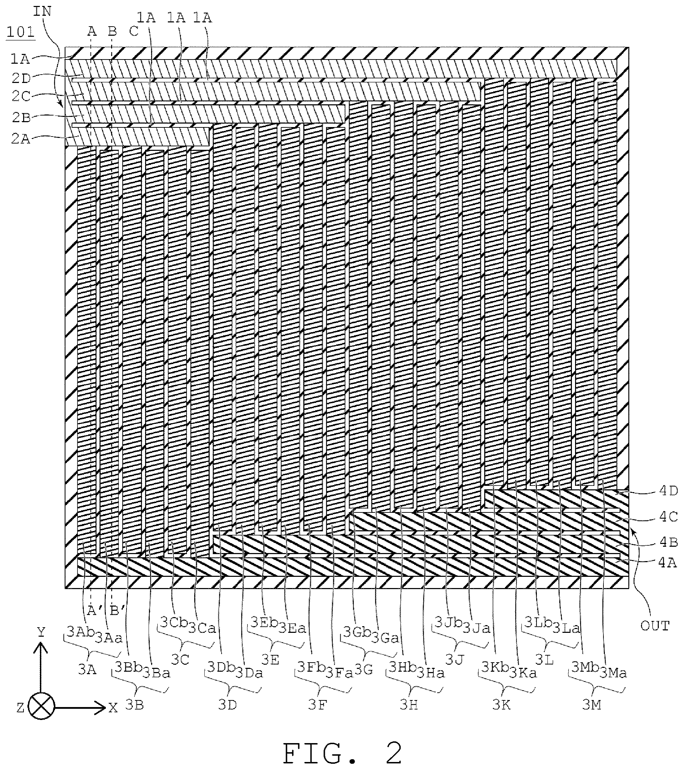

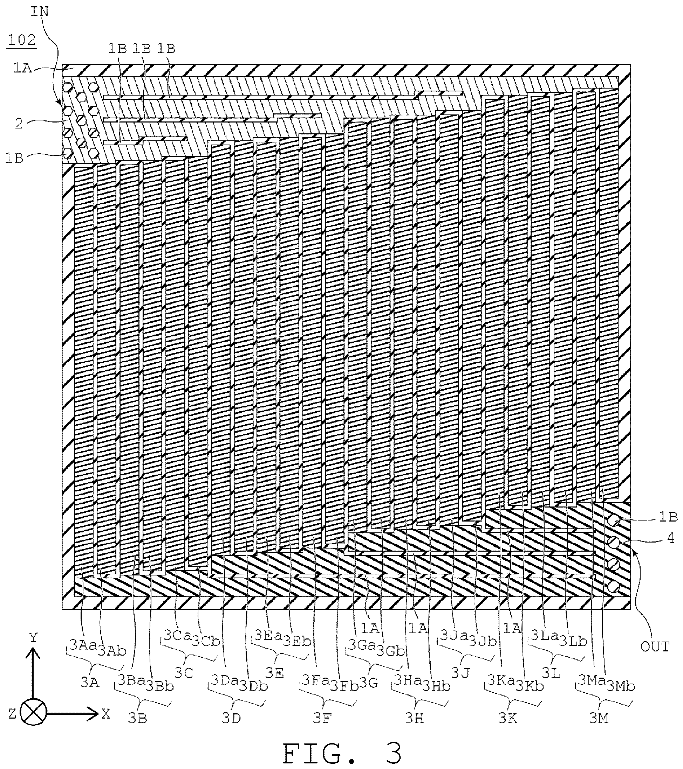

A first embodiment relates to a separator. The separator is a flow distributor (separator with flow channels) used to supply gas to gas diffusion layers and the like. FIG. 1 shows a schematic diagram of a separator 100 according to an embodiment. FIG. 2 shows a schematic diagram of a separator 101. FIG. 3 shows a schematic diagram of a separator 102. The explanation for separator 100 is mostly common to the explanations for the separators 101 and 102.

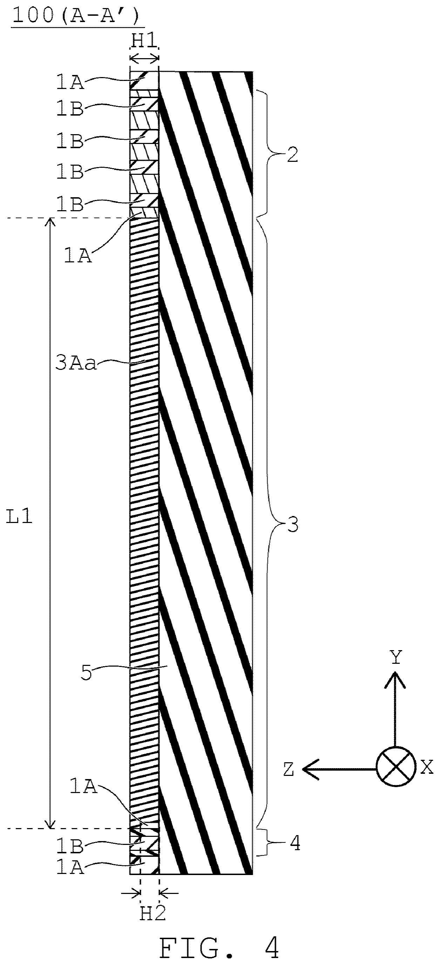

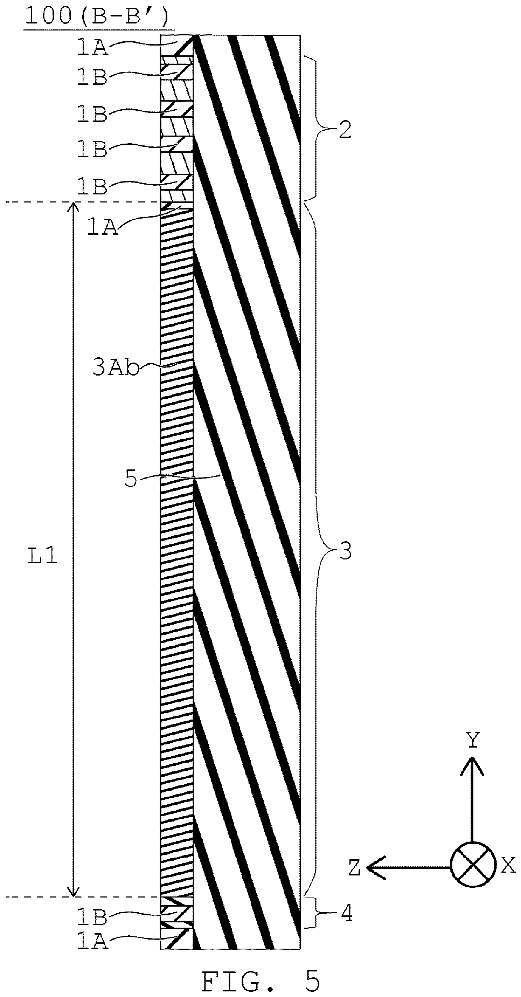

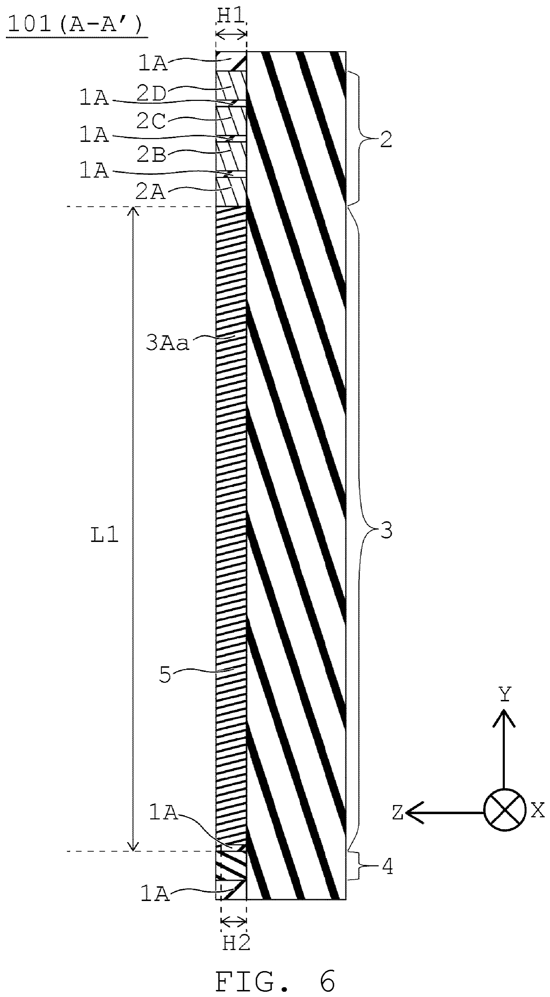

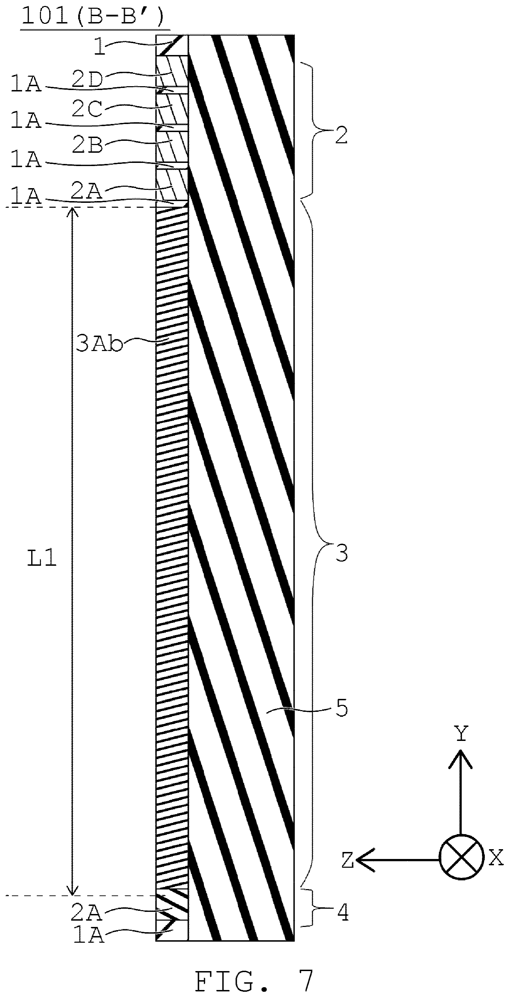

FIG. 4 shows a schematic cross-sectional diagram of A-A' of the separator 100 shown in FIG. 1. FIG. 5 shows a schematic cross-sectional diagram of B-B' of the separator 100 shown in FIG. 1. FIG. 6 shows a schematic cross-sectional diagram of A-A' of separator 101 shown in FIG. 2. FIG. 7 shows a schematic cross-sectional diagram of B-B' of separator 100 shown in FIG. 2.

The separator 100 comprises a flow-channel wall 1A, one or more ribs 1B, and a frame 5 that supports the flow-channel wall 1A and the rib 1B. The separator 101 comprises a flow-channel wall 1A and a frame 5 that supports the flow-channel wall 1A and the rib 1B. In the figures, the directions are represented by X, Y, and Z.

The flow-channel wall 1A is constituted of, for example, metal. The rib 1B is constituted of, for example, metal. The frame 5 is constituted of, for example, metal.

The separator 100 according to the first embodiment can be used in electrochemical cells such as fuel cells or electrolysis. The separator 100 supplies a fluid used in electrode reactions and discharges a fluid containing products from the electrode reactions. The fluid is a gas and/or a liquid.

The fluid enters from the supply port IN and is discharged from the exhaust port OUT. It is preferable that the separator 100 have a single supply port IN and a single exhaust port OUT. The fluid flows, for example, from the supply port IN side to the exhaust port OUT side due to the pressure difference between the supply port IN and the exhaust port OUT.

The flow-channel wall 1A is provided on the frame 5 and is a wall-like member that divides the flow channels. The flow-channel wall 1A divides the space on frame 5 into three regions:
(i) the supply-area 2, which is connected to a flow channel on the IN side of the supply port and in which the fluid diffuses primarily in the second direction; (ii) the exhaust-area 4, which is connected to a flow channel on the OUT side of the exhaust port and in which the fluid diffuses primarily in the second direction;
(iii) the groove-area 3, which connects the supply-area 2 and the exhaust-area 4 in the first direction in which the fluid diffuses primarily in the first direction.

The rib 1B is a wall-like or protrusion-like structure provided on the frame 5. The protrusion-like rib 1B has one or more shapes selected from the group consisting of a cylinder, a polygonal prism, a truncated cone and a truncated pyramid. The wall-like rib 1B has a plate-like shape extending regularly or irregularly in the surface direction of the frame 5. It is preferable for the protrusion-like rib 1B and/or the wall-like rib 1B to be physically separated from the flow-channel wall 1A.

In the separator 100 shown in FIG. 1, the rib 1B is columnar and is provided throughout the supply-area 2 and the exhaust-area 4.

In the separator 101 shown in FIG. 2, the flow-channel wall 1A is provided in the supply-area 2 and the exhaust-area 4, and the flow-channel wall 1A divides the supply-area 2 and the exhaust-area 4 without the rib 1B being provided. The area where the flow-channel wall 1A is provided is the groove-area 3. The flow-channel wall 1A (groove-area 3) is positioned between the supply-area 2 and the exhaust-area 4.

The supply port IN is an opening at the supply-area 2 side of the separator 100. The exhaust port OUT is an opening at the exhaust-area 4 side of the separator 100.

The rib 1B of the separator 102 in FIG. 3 is provided in the supply-area 2 and the exhaust-area 4. In the supply-area 2 of the separator 102 in FIG. 3, both columnar ribs 1B and wall-shaped ribs 1B (guide ribs) are provided. In the exhaust-area 4 of the separator 102 in FIG. 3, a flow-channel wall 1A and columnar ribs 1B are provided.

The flow-channel wall 1A or both the flow-channel wall 1A and the rib 1B on the side opposite to the frame 5 side of the separator 100 are in direct contact with, for example, a gas diffusion layer. The grooves of the separator 100 are connected to, for example, a gas diffusion layer. Overall, the grooves of the separator 100 become flow channels for fluids to the gas diffusion layer.

It is preferable that the side opposite to the frame 5 side of the supply-area 2, groove-area 3 and exhaust-area 4 be entirely open. That is, the supply-area 2, groove-area 3 and exhaust-area 4 face (directly face) the gas diffusion layer.

By providing the flow-channel wall 1A or both the flow-channel wall 1A and the rib 1B on the frame 5, contact between the gas diffusion layer and the frame 5 is reduced. Preferably, the gas diffusion layer is in direct contact with the flow-channel wall 1A or both the flow-channel wall 1A and the rib 1B.

The separator 100 is an Interdigitated Flow Channel type separator. The Interdigitated Flow Channel type separator has a structure in which grooves connected to the channel of the supply-area 2 side and grooves connected to the channel of exhaust-area 4 side are alternately arranged. The arranged direction of that flow channels is vertical to the longitudinal direction of the grooves in the groove-area 3. The arranged direction of that flow channels is vertical to the direction from the supply-area 2 to the exhaust-area 4. Conversely to the embodiment, it may be possible to flow fluid from the exhaust side of the separator 100 to the supply side.

The space surrounded by the flow-channel wall 1A and the frame 5 is the grooves. The groove is formed by the flow-channel wall 1A. The outermost side of the flow-channel wall 1A forms a rim of the separator 100. Grooves exist between the flow-channel walls 1A. Fluid flows through the grooves.

The separator 100 has the supply-area 2, the groove-area 3, and the exhaust-area 4. The flow-channel wall 1A divides the supply-area 2, the groove-area 3, and the exhaust-area 4. The flow channel of the supply-area 2 is connected to the flow channel of the groove-area 3. The flow channel of the groove-area 3 is connected to the flow channel of the exhaust-area 4. For example, the connection of the flow channels means that the space of the supply-area 2 and the space of the groove-area 3 are connected without through the flow-channel wall 1A. For example, the connection of the flow channels means that the space of the exhaust-area 4 and the space of the groove-area 3 are connected without through the flow-channel wall 1A. For example, the connection of the flow channels means that the space of the exhaust-area 4 and the space of the groove-area 3 are connected through an opening of the flow-channel wall 1A on the exhaust-area 4 side.

The supply-area 2 connects the supply port IN and the groove-area 3. The supply-area 2 is a region for diffusing fluid that has entered from the supply port IN. In the supply-area 2, the frame 5 is provided with the flow-channel wall 1A and/or the rib 1B. The flow-channel wall 1A of the separator 101 in the supply-area 2 is connected to the flow-channel wall 1A of the groove-area 3.The second direction is the longitudinal direction of the supply-area 2. The fluid diffuses in the longitudinal direction of the supply-area 2 and the first direction in the supply-area 2, and flows into the groove-area 3 side.

In the separator 101, the flow-channel wall 1A divides the supply-area 2, and the supply-area 2 includes a first supply groove 2A, a second supply groove 2B, a third supply groove 2C, and a fourth supply groove 2D.

The groove-area 3 includes a plurality of grooves (3A to 3M) that connect the supply-area 2 and the exhaust-area **4.** The grooves included in the groove group are grooves partitioned by the flow-channel wall 1A. The grooves extend in the first direction (first direction) where the supply-area 2 and the exhaust-area 4 are arranged. It is preferable that the grooves included in the groove group do not include a turnaround portion. It is preferable that the grooves included in the groove group extend only in the first direction.

The groove-area 3 includes one or more groove groups, for example, a first groove group 3A, a second groove group 3B, a third groove group 3C, a fourth groove group 3D, a fifth groove group 3E, a sixth groove group 3F, a seventh groove group 3G, an eighth groove group 3H, a ninth groove group 3J, a tenth groove group 3K, an eleventh groove group 3L, and a twelfth groove group 3M. Each groove group includes a supply-side connection groove and an exhaust-side connection groove. For example, the first groove group 3A includes a first supply-side connection groove 3Aa and a first exhaust-side connection groove 3Ab. It is preferable that the lengths of the grooves in the first direction be the same or substantially the same (the lengths of the grooves are 98% or more and 102% or less of the average length of the grooves in the first direction).

A plurality of groove groups are arranged in a second direction (Y direction). The plurality of groove groups may be offset in the first direction and arranged in the second direction. In the separators 100 to 102 shown, the plurality of groove groups are offset in the first direction and arranged in the second direction, but they may also be arranged in the second direction without being offset in the first direction. When the plurality of groove groups are offset in the first direction and arranged in the second direction, the groove group closer to the supply port IN in the second direction is significantly offset towards the exhaust-area 4 side, the length of the supply-area 2 in the first direction on the groove group side closer to the supply port IN is longer, and the length of the exhaust-area 4 in the first direction on the groove group side closer to the supply port IN is shorter. It is preferable that as the distance from the supply port IN in the second direction increases, the length of the supply-area 2 in the first direction becomes shorter and the length of the exhaust-area 4 in the first direction becomes longer by being offset in the first direction.

The offsets in the first direction of the plurality of groove groups of the separator 100 shown in FIG. 1 and the separator 101 shown in FIG. 2 are different: a first group comprising the first groove group 3A, the second groove group 3B, and the third groove group 3C; a second group comprising the fourth groove group 3D, the fifth groove group 3E, and the sixth groove group 3F; a third group comprising the seventh groove group 3G, the eighth groove group 3H, and the ninth groove group 3J; and a fourth group comprising the tenth groove group 3K, the eleventh groove group 3L, and the twelfth groove group 3M. The amount of offset in the first direction is the same within each group. The groove groups in the first group are the groove groups closest to the supply port IN, and the length of the supply-area 2 connected to the groove groups in the first group is the longest, and the length of the exhaust-area 4 connected to the groove groups in the first group is the shortest (the groove groups of the group closest to the supply port IN are most offset towards the exhaust-area 4 side). From the second group to the fourth group, as the distance from the supply port IN in the second direction increases, the length of the supply-area 2 connected to the groove groups becomes shorter and the length of the exhaust-area 4 connected to the groove groups becomes longer (as the distance between each groove of the groups and the supply port IN in the second direction increases, the amount of offset towards the exhaust-area 4 side from a reference point on the group closest to the supply port IN increases). Therefore, the groove groups in the fourth group are the farthest groove groups from the supply port IN, and the length of the supply-area 2 connected to the groove groups in the fourth group is the shortest, and the length of the exhaust-area 4 connected to the groove groups in the fourth group is the longest (the groove group in the group farthest from the supply port IN is the most offset towards the supply-area 2 side).

The offsets in the first direction of the plurality of groove groups of the separator 102 shown in FIG. 3 are all different, and the length of the supply-area 2 connected to the first groove group 3A closest to the supply port IN in the second direction is the longest among the groove groups in the first group, and the length of the exhaust-area 4 connected to the first groove group 3A closest to the supply port IN in the second direction is the shortest among the groove groups in the first group (the groove groups in the group closest to the supply port IN are most offset towards the exhaust-area 4 side). Further, the third groove group 3C, which is farthest from the supply port IN in the second direction, has the shortest length of the supply-area 2 among the groove groups in the first group and the longest length of the exhaust-area 4 among the groove groups in the first group (the groove group in the group farthest from the supply port IN is most offset towards the supply-area 2 side) . As the distance from the supply port IN in the second direction increases, the length of the supply-area 2 in the first direction decreases, and the length of the exhaust-area 4 in the first direction increases. Specifically, each groove group is offset in the first direction so that the length of the supply-area 2 connected to the twelfth groove group 3M is the shortest and the length of the exhaust-area 4 connected to the twelfth groove group 3M is the longest. The amount of offset of the groove groups may have a regular periodicity, or it may be non-linear.

The flow-channel wall 1A extends in the first direction between the supply-side connection groove and the exhaust-side connection groove. The flow-channel wall 1A bends and turns along the end of the exhaust-side connection groove on the supply-area 2 side. The portion of the flow-channel wall 1A that bends and turns along the end of the exhaust-side connection groove on the supply-area 2 side extends in the second direction. The flow-channel wall 1A bends and turns along the end of the supply-side connection groove on the exhaust-area 4 side. The portion of the flow-channel wall 1A that bends and turns along the end of the supply-side connection groove on the exhaust-area 4 side extends in the second direction.

Unless otherwise specified, the description regarding a groove group applies to each groove group (the nth groove group (n is an integer)) included in the separator 100, even when it is a description of the first groove group 3A. Unless otherwise specified, the description regarding a supply-side connection groove applies to each supply-side connection groove (the nth supply-side connection groove (n is an integer)) included in the separator 100, even when it is a description of the first supply-side connection groove 3Aa. Unless otherwise specified, the description regarding an exhaust-side connection groove applies to each exhaust-side connection groove (the nth exhaust-side connection groove (n is an integer)) included in the separator 100, even when it is a description of the first exhaust-side connection groove 3Ab.

The supply-side connection groove extending in the first direction is a groove with a larger opening on the supply-area 2 side than on the exhaust-area 4 side; or a groove that is opened on the supply-area 2 side and closed on the exhaust-area 4 side, and is a groove that is a flow channel that connects to the flow channel on the supply-area 2 side. The exhaust-side connection groove extending in the first direction is a groove with a larger opening on the exhaust-area 4 side than on the supply-area 2 side; or a groove that is closed on the supply-area 2 side and opened on the exhaust-area 4 side, and is a flow channel that connects to the flow channel on the exhaust-area 4 side.

The exhaust-side connection groove is provided next to the supply-side connection groove. In adjacent supply-side and exhaust-side connection grooves, a supply-side connection groove is provided on one side of the flow-channel wall 1A located between them, and an exhaust-side connection groove is provided on the opposite side. The supply-side connection grooves and exhaust-side connection grooves are preferably arranged alternately. While the groove adjacent to the supply-side connection groove is preferably an exhaust-side connection groove, supply-side connection grooves may be continuously arranged. Exhaust-side connection grooves may also be continuously arranged. The direction in which the supply-side connection grooves and exhaust-side connection grooves are arranged is preferably perpendicular (the second direction) to the first direction.

The exhaust-area 4 connects the groove-area 3 and the exhaust port OUT. The exhaust-area 4 is a region that diffuses the fluid coming in from the groove-area 3 and discharges it from the exhaust port OUT. The frame 5 has the flow-channel wall 1A or/and the rib 1B provided on it, within the exhaust-area 4. The flow-channel wall 1A of the exhaust-area 4 in separator 101 is connected to the flow-channel wall 1A of the groove-area 3. The second direction is the longitudinal direction of the exhaust-area 4. The fluid diffuses in the longitudinal direction of the exhaust-area 4 and the first direction in the exhaust-area 4, and is discharged form the exhaust port OUT side.

In separator 101, the exhaust-area 4 is divided by the flow-channel wall 1A and includes a first exhaust groove 4A, a second exhaust groove 4B, a third exhaust groove 4C, and a fourth exhaust groove 4D.

The separator 100 shown in FIG. 1, the separator 101 shown in FIG. 2, and the separator 102 shown in FIG. 3 include twelve groups of grooves with a total of 24 grooves. Each groove group may include one or more supply-side connection grooves and one or more exhaust-side connection grooves. The number of groove groups and the number of grooves included in each groove group can be selected as appropriate values depending on the width of the flow channel grooves and the shape of the separators 100 to 102.

The first groove group 3A, included in the groove-area 3, includes the first supply-side connection groove 3Aa and the first exhaust-side connection groove 3Ab. A portion of the fluid that has flowed into the first supply-side connection groove 3Aa flows across over the shared flow-channel wall 1A between the first supply-side connection groove 3Aa and the first exhaust-side connection groove 3Ab into the first exhaust-side connection groove 3Ab.

The second groove group 3B includes a second supply-side connection groove 3Ba and a second exhaust-side connection groove 3Bb. The third groove group 3C includes a third supply-side connection groove 3Ca and a third exhaust-side connection groove 3Cb.

The fourth groove group 3D includes a fourth supply-side connection groove 3Da and a fourth exhaust-side connection groove 3Db. The fifth groove group 3E includes a fifth supply-side connection groove 3Ea and a fifth exhaust-side connection groove 3Eb. The sixth groove group 3F includes a sixth supply-side connection groove 3Fa and a sixth exhaust-side connection groove 3Fb.

The seventh groove group 3G includes a seventh supply-side connection groove 3Ga and a seventh exhaust-side connection groove 3Gb. The eighth groove group 3H includes an eighth supply-side connection groove 3Ha and an eighth exhaust-side connection groove 3Hb. The ninth groove group 3J includes a ninth supply-side connection groove 3Ja and a ninth exhaust-side connection groove 3Jb.

The tenth groove group 3K includes a tenth supply-side connection groove 3Ka and a tenth exhaust-side connection groove 3Kb. The eleventh groove group 3L includes an eleventh supply-side connection groove 3La and an eleventh exhaust-side connection groove 3Lb. The twelfth groove group 3M includes a twelfth supply-side connection groove 3Ma and a twelfth exhaust-side connection groove 3Mb.

The width (width of the second supply-side connection groove 3Ba, width of the third supply-side connection groove 3Ca, etc.) W1 of the first supply-side connection groove 3Aa is preferably the same as the width (width of the second exhaust-side connection groove 3Bb, width of the third exhaust-side connection groove 3Cb, etc.) W2 of the first exhaust-side connection groove 3Ab. It is preferable that the width W1 be 95% or more and 105% or less of the width W2.

The thickness (thickness of the flow-channel wall 1A provided at the end on the exhaust-area 4 side of the first supply-side connection groove 3Aa, thickness of the flow-channel wall 1A provided at the end on the exhaust-area 4 side of the second supply-side connection groove 3Ba, etc.) W4 (excluding the thickness W5 of the thinner portion of the flow-channel wall 1A in the case where the thickness of the flow-channel wall 1A provided at the end on the exhaust-area 4 side of the first supply-side connection groove 3Aa is thinner than the thickness of the flow-channel wall 1A between the first supply-side connection groove 3Aa and the first exhaust-side connection groove 3Ab) of the flow-channel wall 1A provided at the end on the exhaust-area 4 side of the first supply-side connection groove 3Aa is preferably the same as the width W3 (width of the flow-channel wall 1A between the second supply-side connection groove 3Ba and the second exhaust-side connection groove 3Bb, width of the flow-channel wall 1A between the third supply-side connection groove 3Ca and the third exhaust-side connection groove 3Cb, etc.) of the flow-channel wall 1A provided between the first supply-side connection groove 3Aa and the first exhaust-side connection groove 3Ab. For example, the width W4 is preferably 95% or more and 105% or less of the width W3.

The width W3 of the flow-channel wall 1A provided between the first supply-side connection groove 3Aa and the first exhaust-side connection groove 3Ab is, more specifically, the average value of the width of the flow-channel wall 1A provided between the first supply-side connection groove 3Aa and the first exhaust-side connection groove 3Ab. This width excludes a range of 5% of the length L1 of the groove from the end of the supply-area 2 side of the first supply-side connection groove 3Aa toward the center direction, and a range of 5% of the length L1 of the groove from the end of the exhaust-area 4 of the first supply-side connection groove 3Aa toward the center direction.

For any one or more of the supply-side connection grooves included in the separator 100 according to an embodiment, it is preferable that: (i) the height of the end portion of the flow-channel wall on the exhaust-area side of the first supply-side connection groove is lower than the height of a portion of the flow-channel wall which is located between the first supply-side connection groove and the first exhaust-side connection groove; (ii) a thickness of the end portion of the flow-channel wall on the exhaust-area side of the first supply-side connection groove is thinner than a thickness of the portion of the flow-channel wall which is located between the first supply-side connection groove and the first exhaust-side connection groove; (iii) the frame on the end side of the first supply-side connection groove on the supply-area side is elevated so that a depth at the end portion of the first supply-side connection groove on the exhaust-area side is shallower than a depth at the end portion of the first supply-side connection groove on the supply-area side; (iv) the flow-channel wall located on the end portion of the first supply-side connection groove on the exhaust-area side, has a through hole; and (v) the flow-channel wall located on the end portion of the first supply-side connection groove on the exhaust-area side is split.

It is preferable that the height H2 of the flow-channel wall 1A provided at the end on the exhaust-area 4 side of the first supply-side connection groove 3Aa be lower than the height H1 of the flow-channel wall 1A provided between the first supply-side connection groove 3Aa and the first exhaust-side connection groove 3Ab. The heights H1 and H2 will be described with reference to FIG. 4, which is a schematic cross-sectional diagram of the first supply-side connection groove 3Aa. The first supply-side connection groove 3Aa has its end on the supply-area 2 side open, while its end on the exhaust-area 4 side is partially blocked and partially open. The heights H1 and H2 are shown in the schematic of FIG.4.

The height H1 is the length of the main flow-channel wall 1A in the third direction, which is the depth of the first supply-side connection groove 3Aa. The third direction is, for example, the Z direction and is perpendicular to the surface direction of the frame 5. The height H1 is more specifically the height of the flow-channel wall 1A on the center side in the first direction of the first supply-side connection groove 3Aa. More specifically, the height of the flow-channel wall 1A on the center side of the first supply-side connection groove 3Aa is the average value of the heights of the flow-channel wall 1A provided between the first supply-side connection groove 3Aa and the first exhaust-side connection groove 3Ab, excluding a range of 5% of the length L1 of the groove from the end of the supply-area 2 side of the first supply-side connection groove 3Aa toward the center direction, and a range of 5% of the length L1 of the groove from the end of the exhaust-area 4 of the first supply-side connection groove 3Aa toward the center direction.

Height H2 is the lowest height (length in the third direction) of the flow-channel wall 1A extending in the second direction at the end on the exhaust-area 4 side of the first supply-side connection groove 3Aa, within a range from end on the exhaust-area 4 side of the first supply-side connection groove 3Aa to 5% or less of the length L1 of the groove of the first supply-side connection groove 3Aa toward the center of the groove. More specifically, the height H2 is the height of the lowest portion of the flow-channel wall 1A (flow-channel wall 1A whose thickness is the length in the first direction) extending in the second direction at the end on the exhaust-area 4 side of the first supply-side connection groove 3Aa.

By making the height H2 smaller than height H1, it is possible to reduce the accumulation of fluid flowing through the separator 100 at the exhaust-area 4 side of the first supply-side connection groove 3Aa. This can reduce the tendency for products of electrolysis reactions using the separator 100, such as water or salt, to accumulate and be difficult to discharge in the flow-channel wall 1A extending in the second direction at the end on the exhaust-area 4 side of the first supply-side connection groove 3Aa.

It is preferable that the difference (H1 - H2) between the height H1 and height H2 be 100 [µm] or more and 1000 [µm] or less; more preferably 200 [µm] or more and 500 [µm] or less; and even more preferably 370 [µm] or more and 390 [µm] or less.

It is preferable that the difference (H1 - H2) between the height H1 and height H2 be 20% or more and 82% or less of height H1; more preferably 25% or more and 50% or less; and even more preferably 29% or more and 32% or less.

When the height H2 is lower than the height H1, a portion of the flow-channel wall 1A at the end on the exhaust-area 4 side of the first supply-side connection groove 3Aa is open. It is preferable that the area of the open portion of the flow-channel wall 1A at the end on the exhaust-area 4 side be 20% or more and 82% or less of the cross-sectional area of the first supply-side connection groove 3Aa (width W1 (shown in FIG. 1) × height H1); more preferably 25% or more and 50% or less; and even more preferably 29% or more and 32% or less.

It is preferable that the length of the portion where the height of the flow-channel wall 1A at the end on the exhaust-area 4 side is lower, be 10% or more and 50% or less of the width W1 of the first supply-side connection groove 3Aa; more preferably 10% or more and 40% or less; and even more preferably 10% or more and 12% or less.

FIG. 5 is a schematic cross-sectional diagram of the first exhaust-side connection groove 3Ab adjacent to the first supply-side connection groove 3Aa of the separator 100. The supply-area 2 side of the first exhaust-side connection groove 3Ab is closed, and the exhaust-area 4 side is open.

FIG. 6 is a schematic cross-sectional diagram of the first supply-side connection groove 3Aa of the separator 101. Except for the presence or absence of the rib 1B and the flow-channel wall 1A in the supply-area 2 and exhaust-area 4, FIG. 6 is similar to the schematic diagram in FIG. 4.

FIG. 7 is a schematic cross-sectional diagram of the first exhaust-side connection groove 3Ab adjacent to the first supply-side connection groove 3Aa of separator 101. Except for the presence or absence of the rib 1B and the flow-channel wall 1A in the supply-area 2 and exhaust-area 4, FIG. 7 is similar to the schematic diagram in FIG. 5.

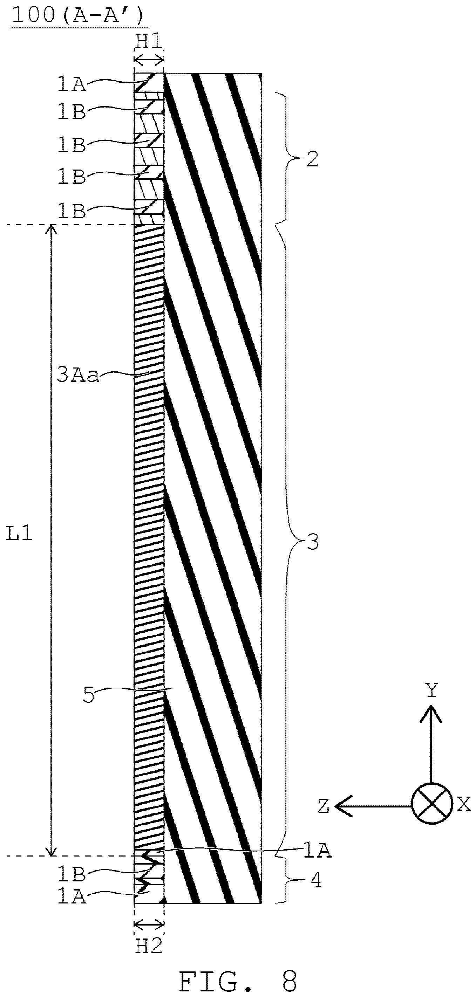

FIG. 8 is a schematic cross-sectional diagram of the second supply-side connection groove 3Ba of the second groove group 3B of the separator 100. The height H1 of the flow-channel wall 1A provided at the end on the exhaust-area 4 side of the second supply-side connection groove 3Ba may be the same or substantially the same, at least in part, as the height H2 of the flow-channel wall 1A provided between the second supply-side connection groove 3Ba and the second exhaust-side connection groove 3Bb. The end on the exhaust-area 4 side of the second supply-side connection groove 3Ba may have the same configuration as that shown in FIG. 5 for the first supply-side connection groove 3Aa, or the configuration shown in FIG. 8. In other words, for some of the supply-side connection grooves, the height H1 of the flow-channel wall 1A provided at the end on the exhaust-area 4 side of some of the supply-side connection grooves may be the same as or substantially the same as the height H2 of the flow-channel wall 1A provided between a supply-side connection groove and a exhaust-side connection groove.

It is preferable that one or more supply-side connection grooves among the first supply-side connection groove 3Aa, the second supply-side connection groove 3Ba, the third supply-side connection groove 3Ca, the fourth supply-side connection groove 3Da, the fifth supply-side connection groove 3Ea, the sixth supply-side connection groove 3Fa, the seventh supply-side connection groove 3Ga, the eighth supply-side connection groove 3Ha, the ninth supply-side connection groove 3Ja, the tenth supply-side connection groove 3Ka, the eleventh supply-side connection groove 3La and the twelfth supply-side connection groove 3Ma, have a height H2 lower than the height H1. It is more preferable that more than half of the supply-side connection grooves have a height H2 lower than the height H1. It is even more preferable that all supply-side connection grooves have a height H2 lower than the height H1. In other words, it is preferable that one or more supply-side connection grooves among multiple supply-side connection grooves have a height H2 lower than the height H1. It is more preferable that more than half of the supply-side connection grooves have a height H2 lower than height H1. It is even more preferable that all supply-side connection grooves have a height H2 lower than height H1.

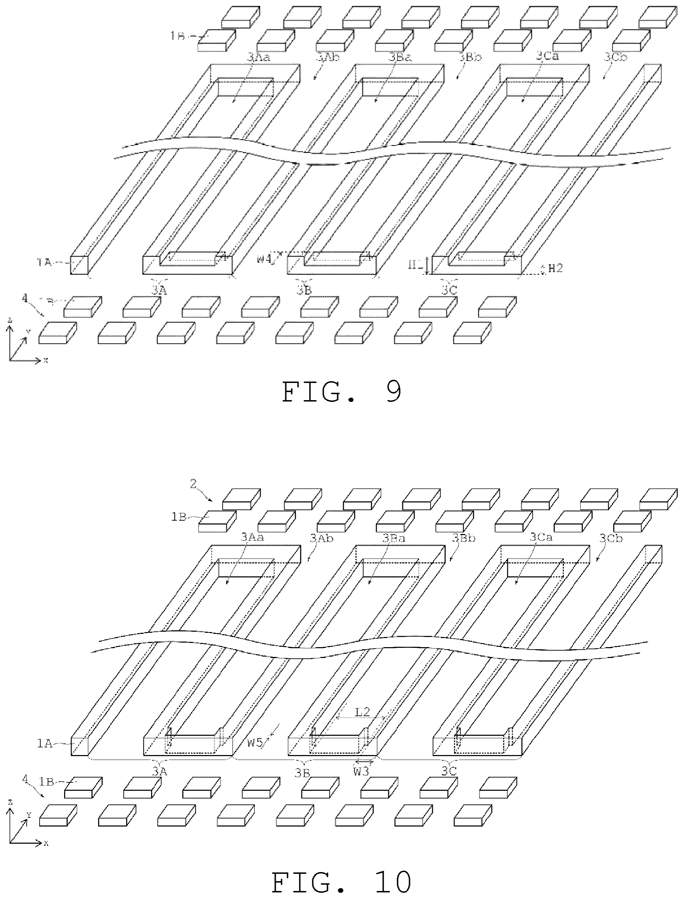

Referring to a schematic perspective diagram in FIG. 9, the first groove group 3A's first supply-side connection groove 3Aa and the first exhaust-side connection groove 3Ab will be explained below. In the diagram of FIG. 9, three sets of grooves are shown. For example, the leftmost set as the first groove group 3A, the next set as the second groove group 3B, and the rightmost set as the third groove group 3C are designated. The dashed lines in the groove-area 3 represent in the diagram of FIG. 9. The separator in FIG. 9 has a configuration where the height H2 of the flow-channel wall 1A at the exhaust-area 4 side end of the first supply-side connection groove 3Aa is lower than the height H1 of the flow-channel wall 1A provided between the first supply-side connection groove 3Aa and the first exhaust-side connection groove 3Ab. By adopting this configuration in one or more groove groups included in the groove-area 3, the depth of the groove on the exhaust-area 4 side can be made shallower without substantially changing the overall depth of the supply-side connection groove, thereby reducing accumulation of fluid at the exhaust-area 4 side of the supply-side connection groove.

In the diagram of FIG. 9, the height H2 of the flow-channel wall 1A (the flow-channel wall 1A extending in the second direction at the exhaust-area 4 side end of the first supply-side connection groove 3Aa) is lower than the height H1 of the flow-channel wall 1A provided between the first supply-side connection groove 3Aa and the first exhaust-side connection groove 3Ab. The height H2 of the second supply-side connection groove 3Ba and the height of the third supply-side connection groove 3Ca at the exhaust-area 4 side ends may also be lower. However, the height H2 of the second supply-side connection groove 3Ba and the height of the third supply-side connection groove 3Ca can be the same as or different from the height H2 of the flow-channel wall 1A at the exhaust-area 4 side end of the first supply-side connection groove 3Aa.

In FIG. 9, the height of the flow-channel wall 1A at the supply-area 2 side end of the first exhaust-side connection groove 3Ab is the same as the height H1 of the flow-channel wall 1A provided between the first supply-side connection groove 3Aa and the first exhaust-side connection groove 3Ab.

When the height H2 is small, fluid may become difficult to flow from the supply-side connection groove to the exhaust-side connection groove through the gas diffusion layer. Therefore, it is preferable that the height H2 of the flow-channel wall 1A be 25% or more and 200% or less of the thickness W4 of the flow-channel wall 1A, more preferably 28% or more and 100% or less, and even more preferably 32% or more and 36% or less.

Next, referring to a schematic perspective diagram in FIG. 10, the first supply-side connection groove 3Aa and the first exhaust-side connection groove 3Ab of the first groove group 3A will be described. In the diagram of FIG. 9, three sets of grooves are shown. For example, the leftmost set as the first groove group 3A, the next set as the second groove group 3B, and the rightmost set as the third groove group 3C are designated. Hidden lines of the groove-area 3 are represented by dashed lines. The separator in the schematic diagram of FIG. 9 which is the separator 100 shown in FIG.1 has a configuration where the thickness of the flow-channel wall 1A at the exhaust-area 4 side end of the first supply-side connection groove 3Aa is thinner than the thickness of the flow-channel wall 1A provided between the first supply-side connection groove 3Aa and the first exhaust-side connection groove 3Ab. By adopting this configuration in one or more groove groups included in the groove-area 3, the depth of the groove on the exhaust-area 4 side can be made shallower (the flow-channel wall 1A at the end on the exhaust-area 4 side, is easy to be across over for fluid) without substantially changing the overall depth of the supply-side connection groove, thereby reducing accumulation of fluid at the exhaust-area 4 side of the supply-side connection groove.

In the diagram of FIG. 10, the thickness W5 of the flow-channel wall 1A at the exhaust-area 4 side end of the first supply-side connection groove 3Aa (the flow-channel wall 1A extending in the second direction at the exhaust-area 4 side end of the first supply-side connection groove 3Aa) is thinner than the thickness W3 of the flow-channel wall 1A provided between the first supply-side connection groove 3Aa and the first exhaust-side connection groove 3Ab. The thicknesses W5 of the flow-channel wall 1A at the exhaust-area 4 side ends of the second supply-side connection groove 3Ba and the third supply-side connection groove 3Ca are also thinner, but the thicknesses W5 of the flow-channel wall 1A at the exhaust-area 4 side ends of the second supply-side connection groove 3Ba and the third supply-side connection groove 3Ca can be the same as or different from the thickness W5 of the flow-channel wall 1A at the exhaust-area 4 side end of the first supply-side connection groove 3Aa.

It is preferable that the thickness W5 of the flow-channel wall 1A at the exhaust-area 4 side end of the first supply-side connection groove 3Aa be 10% or more and 50% or less of the thickness W4 of the flow-channel wall 1A; more preferably 10% or more and 40% or less; and even more preferably 10% or more and 12% or less.

When the thickness of the flow-channel wall 1A at the exhaust-area 4 side end of the first supply-side connection groove 3Aa is thinner than the thickness of the flow-channel wall 1A provided between the first supply-side connection groove 3Aa and the first exhaust-side connection groove 3Ab, the thickness of the flow-channel wall 1A along the first direction at the exhaust-area 4 side end of the first supply-side connection groove 3Aa can be the same as or thicker than the width W3 of the flow-channel wall 1A provided between the first supply-side connection groove 3Aa and the first exhaust-side connection groove 3Ab. By increasing the thickness, the strength reduction in the thinned portion can be compensated for.

It is preferable that the thickness (for example, W3 + (W1 - L2)/2) of the flow-channel wall 1A along the first direction within a range of 5% of the length L1 of the groove of the first supply-side connection groove 3Aa from the exhaust-area 4 side toward the center of its groove (in the first direction) be larger than 100% of the thickness W3 of the flow-channel wall 1A provided between the first supply-side connection groove 3Aa and the first exhaust-side connection groove 3Ab, more preferably 105% or more and 220% or less, even more preferably 106% or more and 160% or less; and most preferably 108% or more and 112% or less.

It is preferable that the length L2 of the flow-channel wall 1A at the exhaust-area 4 side end of the supply-side connection groove where the thickness is thinner than the thickness of the flow-channel wall 1A provided between the supply-side connection groove and the exhaust-side connection groove is preferably 5% or more and 100% or less of the width W1 of the supply-side connection groove; more preferably 10% or more and 100% or less,; and even more preferably 70% or more and 100% or less.

The separator 100 with the configuration where the thickness of the flow-channel wall 1A at the exhaust-area 4 side end of the supply-side connection groove is thinner than the thickness of the flow-channel wall 1A provided between the supply-side connection groove and the exhaust-side connection groove can further adopt the configuration where the height H2 of the flow-channel wall 1A at the exhaust-area 4 side end of the supply-side connection groove is lower than the height H1 of the flow-channel wall 1A provided between the supply-side connection groove and the exhaust-side connection groove. This configuration can be adopted for any of the groove groups.

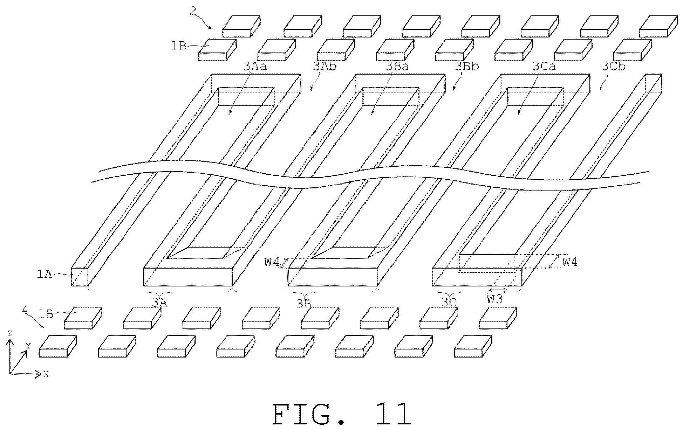

Next, referring to a schematic perspective diagram in FIG. 11, the first supply-side connection groove 3Aa and the first exhaust-side connection groove 3Ab of the first groove group 3A will be described. In FIG. 11, three sets of grooves are shown. For example, the first groove group 3A is on the left side, followed by the second groove group 3B and the third groove group 3C. Hidden lines of the groove-area 3 are represented by the dashed lines. The separator in FIG. 11 has a configuration where the end side of the first supply-side connection groove 3Aa on the exhaust-area 4 side of the frame 5 is elevated so that the depth at the exhaust-area 4 side of the first supply-side connection groove 3Aa becomes shallower than the depth at the supply-area 2 side of the first supply-side connection groove 3Aa compared to the configuration of the separator shown in FIG.1. By adopting this configuration for one or more groove groups included in the groove-area 3, it is possible to reduce the overall depth of the supply-side connection grooves without substantially changing the overall depth of the supply-side connection grooves and make the depth of the groove at the exhaust-area 4 side shallower. This configuration reduces the accumulation in the supply-side connection groove at the exhaust-area 4 side.

The end side of the first supply-side connection groove 3Aa on the exhaust-area 4 side of the frame 5 is elevated by forming a convex portion that is sloped and/or inclined. This makes the depth at the exhaust-area 4 side of the first supply-side connection groove 3Aa shallower.

It is preferable that a value of the volume V1 per unit length (corresponding to an average depth D1 of the groove) of the groove within a range of 5% length L1 from the exhaust-area 4 side towards the center of its groove in the first direction of the first supply-side connection groove 3Aa be smaller than a value of the volume V2 per unit length (corresponding to an average depth D2 of the groove) of the first supply-side connection groove 3Aa in the first direction excluding a portion of the first supply-side connection groove 3Aa within a range of 5% length L1 from the supply-area 2 side towards the center of its groove in the first direction of the first supply-side connection groove 3Aa and also excluding a portion of the first supply-side connection groove 3Aa in the first direction within a range of 5% length L1 from the exhaust-area 4 side towards the center of its groove in the first direction of the first supply-side connection groove 3Aa.

When V1 (D1) is large, fluid flow from the supply-side connection groove to the exhaust-side connection groove through the gas diffusion layer may become difficult. Therefore, it is preferable that V1 (D1) be 10% or more and 50% or less of V2 (D2); more preferably 10% or more and 40% or less; and even more preferably 10% or more and 12% or less.

As shown in FIG. 11, the configuration in which the frame 5 on the exhaust-area 4 side of the first supply-side connection groove 3Aa is elevated, thereby making the depth at that groove's exhaust-area 4 end shallower than the depth at its supply-area 2 end, need not be adopted for any of the supply-side connection grooves. For example, the frame 5 on the exhaust-area 4 side of the third supply-side connection groove 3Ca is not elevated.

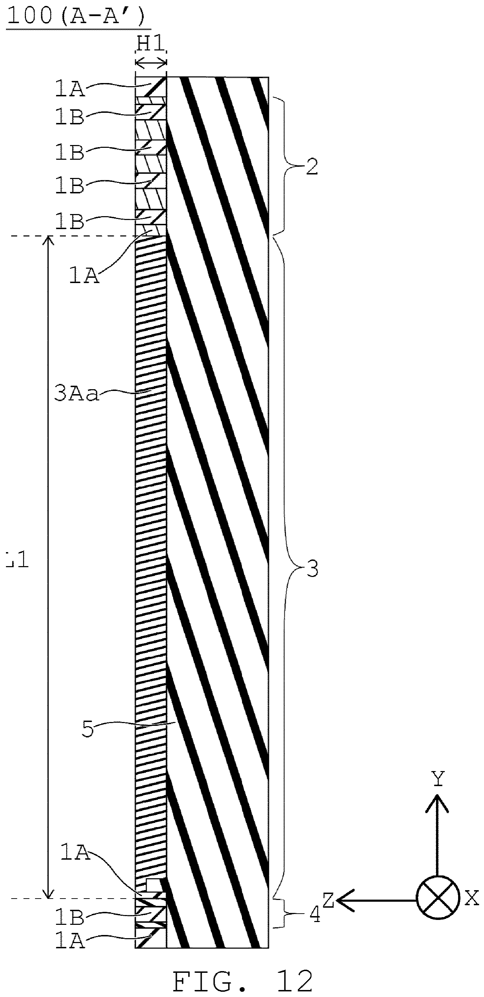

FIG. 12 shows a schematic cross-sectional diagram of the separator 100. As shown in the diagram in FIG. 12, the frame 5 may be elevated in a stepped manner. It is preferable that the portion where the frame 5 is elevated is in direct contact with the flow-channel wall 1A extending in the second direction from the end of the exhaust-area 4 side of the first supply-side connection groove 3Aa, but it may be spaced apart.

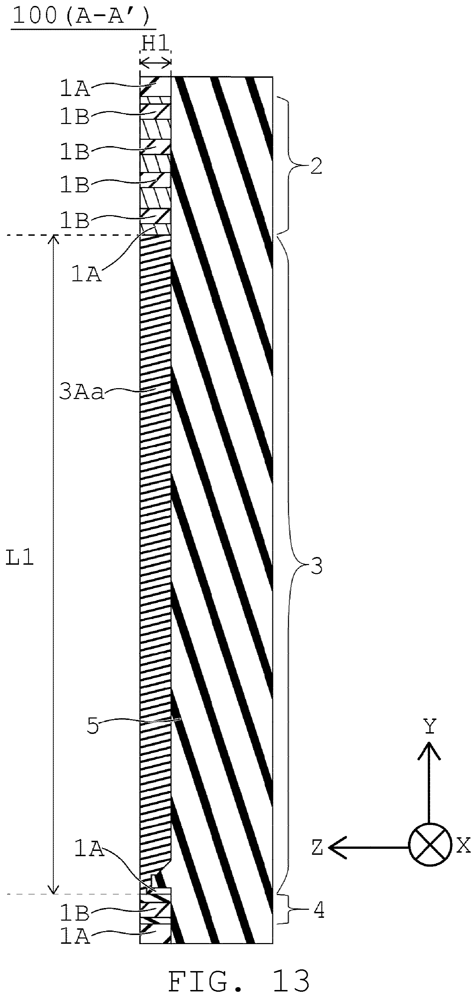

FIG. 13 shows a schematic cross-sectional diagram of the separator 100. As shown in the diagram in FIG. 13, the frame 5 may be elevated by using protrusions that combine stepped projections and slopes.

The separator 100 adopting the configuration in which the frame 5 on the exhaust-area 4 side of the first supply-side connection groove 3Aa is elevated, thereby making the depth at that groove's exhaust-area 4 end shallower than the depth at its supply-area 2 end, may also incorporate the configuration where the height H2 of the flow-channel wall 1A located at the end on the exhaust-area 4 side of the supply-side connection groove is lower than the height H1 of the flow-channel wall 1A provided between the supply-side connection groove and the exhaust-side connection groove, or both the configuration where the thickness of the flow-channel wall 1A located at the end on the exhaust-area 4 side of the supply-side connection groove is thinner than the thickness of the flow-channel wall 1A provided between the supply-side connection groove and the exhaust-side connection groove. Any combination of these configurations or a single configuration can be adopted for any groove group.

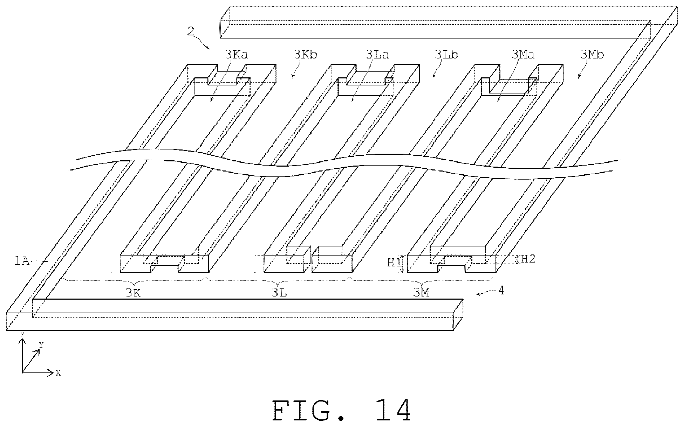

Next, referring to a schematic perspective diagram in FIG. 14, the supply-side and exhaust-side connection grooves using the tenth groove group 3K, the eleventh groove group 3L and the twelfth groove group 3M as examples will be described. In FIG. 14, three sets of grooves are shown. For example, from the left side of the drawing, they are the tenth groove group 3K, the eleventh groove group 3L and the twelfth groove group 3M. Hidden lines of the groove-area 3 are represented by the dashed lines. The separator in FIG. 14 is similar to the separator 102 shown in FIG. 3. The separator of FIG. 14 has the through holes for the tenth supply-side connection groove 3Ka and the twelfth supply-side connection groove 3Ma in the flow-channel wall 1A located at the end on the exhaust-area 4 side, and/or the split on the eleventh supply-side connection groove 3La. By adopting this configuration for one or more groove groups included in the groove-area 3, it is possible to reduce the overall depth of the supply-side connection grooves without substantially changing the over all depth and make the depth of the groove at the exhaust-area 4 side shallower. This configuration reduces accumulation in the supply-side connection groove at the exhaust-area 4 side.

FIG. 14 shows a configuration where through-holes are provided in the flow-channel wall 1A (extending in the second direction from the end on the exhaust-area 4 side of the tenth supply-side connection groove 3Ka) located at the end on the exhaust-area 4 side of the tenth supply-side connection groove 3Ka. By providing through-holes in the flow-channel wall 1A extending in the second direction from the end on the exhaust-area 4 side of the supply-side connection grooves, it becomes easier to discharge fluids that are difficult to pass over the flow-channel wall 1A extending in the second direction from the end on the exhaust-area 4 side of the supply-side connection groove.

When the through-hole area is large, there may be cases where fluid flow is hindered through the gas diffusion layer from the supply-side connection groove to the exhaust-side connection groove. Therefore, it is preferable that the through-hole area be 25% or more and 50% or less of the area including the through-hole of the flow-channel wall 1A extending in the second direction from the end of the exhaust-area 4 side on the supply-side connection groove side; more preferably 28% or more and 40% or less; and even more preferable 32% or more and 36% or less.

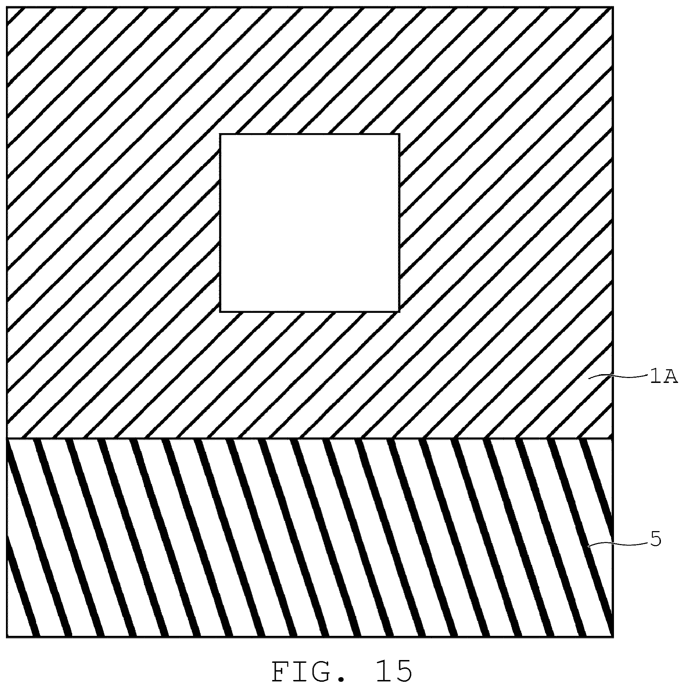

FIG. 15 shows a schematic cross-sectional diagram of the separator 100. As shown in the diagram in FIG. 15, the through-hole indicated by the blank area may be located inside the edge of the flow-channel wall 1A. That is, the through-hole is formed without creating a cutout (notch) in the flow-channel wall 1A.

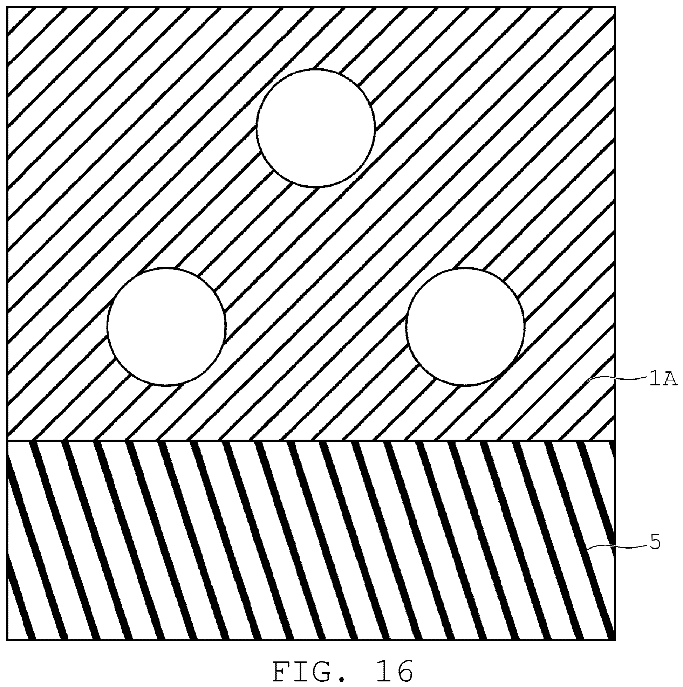

FIG. 16 shows a schematic cross-sectional diagram of the separator 100. As shown in the diagram in FIG. 16, multiple through-holes indicated by blank areas may be formed in the flow-channel wall 1A.

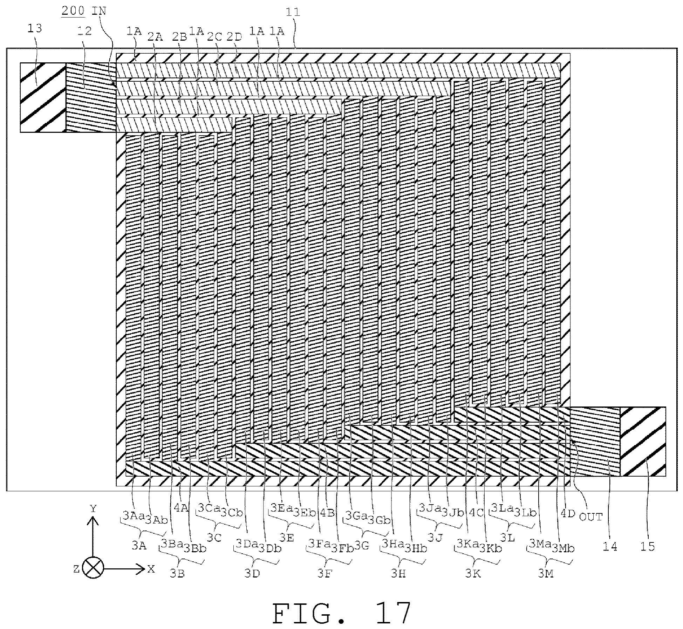

The eleventh groove group 3L in the diagram in FIG. 17 adopts the configuration where the flow-channel wall 1A (extending in the second direction from the end on the exhaust-area 4 side of the eleventh supply-side connection groove 3La) located at the end on the exhaust-area 4 side of the eleventh supply-side connection groove 3La is split. By splitting the flow-channel wall 1A located at the end on the exhaust-area 4 side of the tenth supply-side connection groove 3Ka, a functional through-hole is effectively created in that wall. Splitting the flow-channel wall 1A makes it easier for fluids hat have difficulty passing over the portion of the flow-channel wall 1A that extends in the second direction from the exhaust-area 4 side of a supply-side connection groove to be discharged.

When the area where the flow-channel wall 1A opens due to splitting is large, fluid flow from the supply-side connection groove to the exhaust-side connection groove through the gas diffusion layer may become difficult. Therefore, it is preferable that the area of the opening where the flow-channel wall 1A opens due to splitting be 25% or more and 50% or less of the area of the flow-channel wall 1A extending in the second direction from the end on the exhaust-area 4 side of the supply-side connection groove including the opening; more preferably 28% or more and 40% or less; and even more preferably 32% or more and 36% or less.

The separator 100 adopting the configuration where a through-hole is provided in the flow-channel wall 1A located at the end on the exhaust-area 4 side of the supply-side connection groove, or the flow-channel wall 1A located at the end on the exhaust-area 4 side of the supply-side connection groove is split can further adopt one or more of the following configurations: the configuration where the height of the flow-channel wall 1A located at the end on the exhaust-area 4 side of the supply-side connection groove is lower than the height H1 of the flow-channel wall 1A provided between the supply-side connection groove and the exhaust-side connection groove; the configuration where the thickness of the flow-channel wall 1A located at the end on the exhaust-area 4 side of the supply-side connection groove is thinner than the thickness of the flow-channel wall 1A provided between the supply-side connection groove and the exhaust-side connection groove; and the configuration where the end side of the exhaust-area 4 side of the supply-side connection groove of the frame 5 is elevated so that the depth at the exhaust-area 4 side becomes shallower than the depth at the supply-area 2 side. Any combination or single adoption of these configurations is possible for any groove group.

The separator of the embodiment may adopt a configuration where the height of the flow-channel wall 1A located at the supply-area 2 side end of the exhaust-side connection groove is lower than the height H1 of the flow-channel wall 1A provided between the supply-side connection groove and the exhaust-side connection groove; a configuration where the thickness of the flow-channel wall 1A located at the supply-area 2 side end of the exhaust-side connection groove is thinner than the thickness of the flow-channel wall 1A provided between the supply-side connection groove and the exhaust-side connection groove; a configuration where through-holes are provided in the flow-channel wall 1A located at the supply-area 2 side end of the exhaust-side connection groove; or a configuration where the flow-channel wall 1A located at the supply-area 2 side end of the exhaust-side connection groove is split. FIG. 15 shows that the tenth groove group 3K, the eleventh groove group 3L, and the twelfth groove group 3M adopt the configuration where the height of the flow-channel wall 1A located at the supply-area 2 side end of the exhaust-side connection groove is lower than the height H1 of the flow-channel wall 1A provided between the supply-side connection groove and the exhaust-side connection groove. It is preferable that this configuration for the exhaust-side connection groove satisfy the requirements described above for the supply-side connection groove.

The configurations where the height of the flow-channel wall 1A located at the supply-area 2 side end of the exhaust-side connection groove is lower than the height H1 of the flow-channel wall 1A provided between the supply-side connection groove and the exhaust-side connection groove; where the thickness of the flow-channel wall 1A located at the supply-area 2 side end of the exhaust-side connection groove is thinner than the thickness of the flow-channel wall 1A provided between the supply-side connection groove and the exhaust-side connection groove; where through-holes are formed in the flow-channel wall 1A located at the supply-area 2 side end of the exhaust-side connection groove; or where the flow-channel wall 1A located at the supply-area 2 side end of the exhaust-side connection groove is split, are preferably adopted for groove groups that are closer to the outlet OUT in the second direction. Adopting these configurations for groove groups that are further from the supply port IN may facilitate fluid flow into grooves farther along the flow path and improve the uniformity of fluid flow.

When groove groups are located in order from the first groove group to the nth groove group in the second direction from the supply port IN side to the outlet OUT side, it is preferable that the exhaust-side connection groove of the m1th (m1 is an integer equal to or greater than n/2) groove group(s) adopt the configurations where the height of the flow-channel wall 1A located at the supply-area 2 side end of the exhaust-side connection groove is lower than the height H1 of the flow-channel wall 1A provided between the supply-side connection groove and the exhaust-side connection groove; where the thickness of the flow-channel wall 1A located at the supply-area 2 side end of the exhaust-side connection groove is thinner than the thickness of the flow-channel wall 1A provided between the supply-side connection groove and the exhaust-side connection groove; where through-holes are formed in the flow-channel wall 1A located at the supply-area 2 side end of the exhaust-side connection groove; or where the flow-channel wall 1A located at the supply-area 2 side end of the exhaust-side connection groove is split.

When groove groups are located in order from the first groove group to the nth groove group in the second direction from the supply port IN side to the outlet OUT side, it is preferable that the exhaust-side connection groove of the m2th (m2 is an integer equal to or greater than n/1.5) groove group(s) adopt the configurations where the height of the flow-channel wall 1A located at the supply-area 2 side end of the exhaust-side connection groove is lower than the height H1 of the flow-channel wall 1A provided between the supply-side connection groove and the exhaust-side connection groove; where the thickness of the flow-channel wall 1A located at the supply-area 2 side end of the exhaust-side connection groove is thinner than the thickness of the flow-channel wall 1A provided between the supply-side connection groove and the exhaust-side connection groove; where through-holes are formed in the flow-channel wall 1A located at the supply-area 2 side end of the exhaust-side connection groove; or where the flow-channel wall 1A located at the supply-area 2 side end of the exhaust-side connection groove is split.

When groove groups are located in order from the first groove group to the nth groove group in the second direction from the supply port IN side to the outlet OUT side, it is preferable that the exhaust-side connection groove of the m3th (m3 is an integer equal to or greater than n/1.2) groove group(s) adopt the configurations where the height of the flow-channel wall 1A located at the supply-area 2 side end of the exhaust-side connection groove is lower than the height H1 of the flow-channel wall 1A provided between the supply-side connection groove and the exhaust-side connection groove; where the thickness of the flow-channel wall 1A located at the supply-area 2 side end of the exhaust-side connection groove is thinner than the thickness of the flow-channel wall 1A provided between the supply-side connection groove and the exhaust-side connection groove; where through-holes are formed in the flow-channel wall 1A located at the supply-area 2 side end of the exhaust-side connection groove; or where the flow-channel wall 1A located at the supply-area 2 side end of the exhaust-side connection groove is split.

It is preferable that the heights of the supply-area 2 and the exhaust-area 4 relative to the surface of the frame 5 on the groove-area 3 are higher than the depth of the grooves in the groove-area 3. The supply-area 2 and the exhaust-area 4 are areas with a relatively small volume compared to the groove-area 3. From the perspective of uniformly distributing fluid to each groove in the groove-area 3, it is preferable that the heights of the supply-area 2 and the exhaust-area 4 be 150% or more of the depth of the grooves in the groove-area 3; more preferably 200% or more; and even more preferably 350% or more.

The embodiment can prevent fluid accumulation at the exhaust-side connection groove's supply-area 2 side and improve the uniformity of fluid flow.

### (SECOND EMBODIMENT)

A second embodiment relates to a separator unit. The separator unit has the separator 100 (101, 102) of the first embodiment. FIG. 17 shows a schematic diagram of the separator unit 200. The separator unit 200 includes a base member 11, the separator 100, a supply connection-channel 12, a supply manifold 13, an exhaust connection-channel 14 and an exhaust manifold 15.

The base member 11 is preferably insulating and is composed of, for example, a resin material. The separator 100 is provided on the base member 11.

The supply connection-channel 12 is provided between the supply manifold 13 and the supply port IN. The supply connection-channel 12 is a flow passage that connects the flow passage on the supply-area 2 side of the separator 100 to the supply manifold 13. The supply connection-channel 12 may have a groove. The supply connection-channel 12 may consist of a protrusion and recess on the base member 11, or may be composed of a separate member from the base member 11.

The supply manifold 13 is an opening of the separator unit 200. Fluid is supplied from the supply manifold 13. Other manifolds not shown in the figure may be provided in the separator unit 200.

The exhaust connection-channel 14 is provided between the exhaust manifold 15 and the exhaust port OUT. The exhaust connection-channel 14 is a flow passage that connects the flow passage on the exhaust-area 4 side of the separator 100 to the exhaust manifold 15. The exhaust connection-channel 14 may have a groove. The exhaust connection-channel 14 may consist of a protrusion and recess on the base member 11, or may be composed of a separate member from the base member 11.

The exhaust manifold 15 is an opening of the separator unit 200. Fluid is discharged from the exhaust manifold 15. Other manifolds not shown in the figure may be provided in the separator unit 200.

By adopting the configuration of this embodiment, it is possible to make the fluid flow uniformly. The uniform flow of fluid reduces gas accumulation.

### (Third Embodiment)

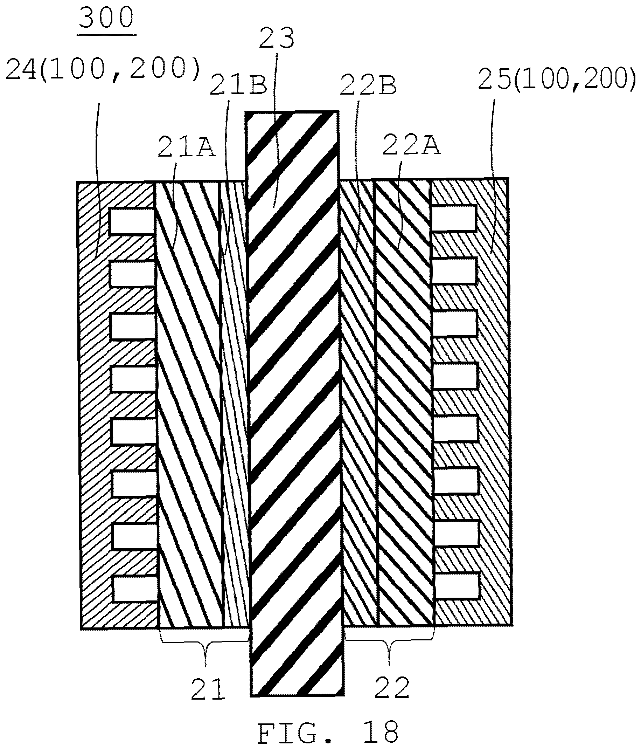

A third embodiment relates to an electrochemical cell. FIG. 18 shows a schematic diagram of an electrochemical cell 300 according to the third embodiment. The electrochemical cell 300 is, for example, for water electrolysis, CO₂ electrolysis, ammonia electro-synthesis, or fuel cells. When CO₂ is used in the electrolytic reaction, it may be CO₂ recovered from exhaust gas, from exhaust gases or other sources, using an amine solution. The electric power generated by the electrochemical cell may be used to carry out electrolysis using a similar electrochemical cell, charge a secondary battery, or be consumed by a load. A fuel cell or solar cell can also be used as a power source for the electrochemical cell. Using the electrochemical cell, for example, surplus electrical energy can be converted into chemical energy and stored.

The electrochemical cell 300 includes an anode 21, a cathode 22, a diaphragm 23, a first separator 24 and a second separator 25.

The first electrode (anode) 21 has a support 21A such as a porous gas diffusion layer on the first separator 24 side and a catalyst layer 21B on the separator 23 side. Suitable materials are used for the support 21A and catalyst layer 21B of the first electrode 21 depending on the anode reaction of the first electrode 21.

The second electrode (cathode) 22 has a support 22A such as a porous gas diffusion layer on the second separator 25 side and a catalyst layer 22B on the separator 23 side. Suitable materials are used for the support 22A and catalyst layer 22B of the second electrode 22 depending on the cathode reaction of the second electrode 22.

The diaphragm 23 is provided between the cathode 22 and the anode 21, and laminated with the cathode 22 and the anode 21 to form a membrane electrode assembly (MEA). The diaphragm 23 allows ions to move between the anode 21 and the cathode 22 and can separate the anode side of the anode 21 and the first separator 24 side from the cathode side of the cathode 22 and the second separator 25 side. Specifically, it is composed of an ion exchange membrane such as an anion exchange membrane or a cation exchange membrane, or a porous film made of an organic polymer material.

Examples of ion exchange membranes used in the diaphragm 23 include cation exchange membranes such as Nafion (registered trademark) and Flemion (registered trademark), and anion exchange membranes such as NeoSepta (registered trademark), Selemion (registered trademark), Sustainion (registered trademark), and PiperION (registered trademark). The organic polymer material constituting the porous membrane is not particularly limited, but examples include fluorine resins such as Teflon (registered trademark) and polyvinylidene fluoride, hydrocarbon polymers such as polyether, polysulfone, polyethylene, polypropylene, polyethersulfone, and cellulose.

The first separator 24 supplies the fluid used for the reaction of the first electrode 21 and discharges the fluid containing the reactants. The first separator 24 is electrically connected to the first electrode 21.

The second separator 25 supplies the fluid used for the reaction of the second electrode 22 and discharges the fluid containing the reactants. The second separator 25 is electrically connected to the second electrode 22.

The separator 100 of the first embodiment or the separator unit 200 of the second embodiment is preferably used for the first separator 24 and/or the second separator 25.

By using the separator 100 of the first embodiment or the separator unit 200 of the second embodiment, gas accumulation within the separator 100 can be reduced, thereby reducing the deterioration of the diaphragm 23.

### (Fourth Embodiment)

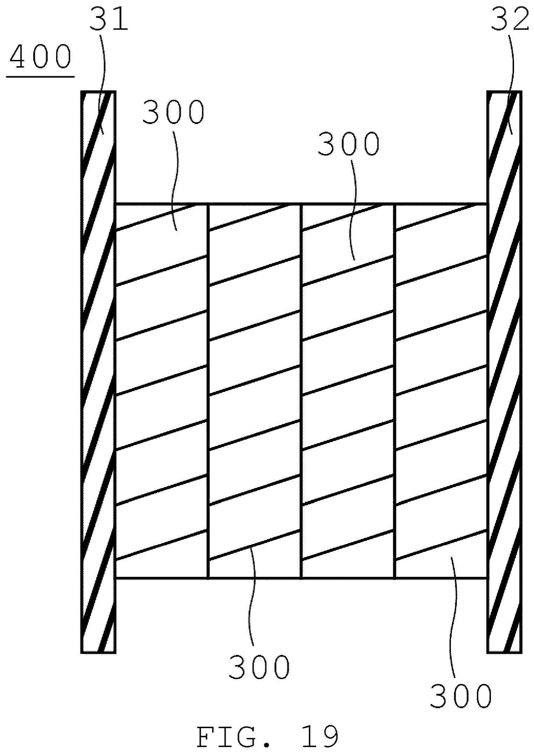

A fourth embodiment relates to a stack. FIG. 19 is a schematic cross-sectional diagram showing the stack 400 of the fourth embodiment. The stack 400 of the fourth embodiment shown in FIG. 19 comprises a plurality of electrochemical cells 300 connected in series. Tightening plates 31 and 32 are attached to both ends of the stack 400. Variant electrochemical cells can also be used in the fourth embodiment.

When performing electrolysis, the amount of H₂, CO, and other carbon compounds produced by a single electrochemical cell 300 is small. Similarly, when generating electricity, the amount of electricity generated by a single electrochemical cell 300 is small. Therefore, configuring the stack 400 comprising a plurality of electrochemical cells 300 connected in series increases the amount of product and power generation.

### (Fifth Embodiment)

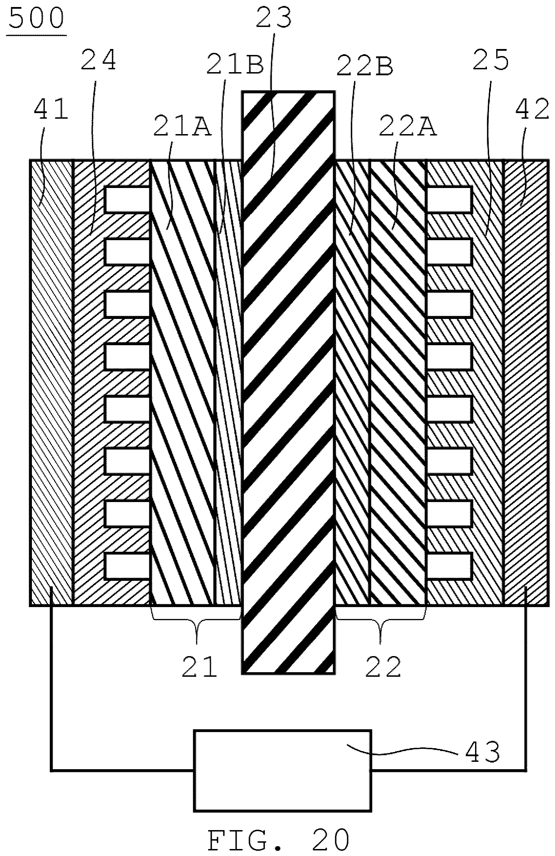

A fifth embodiment relates to an electrolyzing apparatus and a fuel cell. The electrolyzing apparatus and the fuel cell use the electrochemical cell 300 or the stack 400 using the electrochemical cell 300. FIG. 20 shows a schematic diagram of the apparatus 500 of the fourth embodiment. The apparatus 500 uses the electrochemical cell 300. The apparatus 500 illustrates part of the configuration of an actual apparatus. When CO₂ is subjected to electrolysis in the electrochemical cell 300, the CO₂ subjected to electrolysis in the electrochemical cell 300 may be CO₂ gas recovered from combustion gases and the like using an amine solution or the like.

The apparatus 500 includes the electrochemical cell 300, an anode collector plate 41, a cathode collector plate 42, and a power supply or a load 43.

The anode collector plate 41 is provided on the first separator 24 of the electrochemical cell 300. The first separator 24 is electrically connected to the anode collector plate 41.

The cathode collector plate 42 is provided on the second separator 25 of the electrochemical cell 300. The second separator 25 is electrically connected to the cathode collector plate 42.

The separator 100 of the first embodiment or the separator unit 200 of the second embodiment is preferably used for the first separator 24 and/or the second separator 25.

The power supply or load 43 is connected between the anode collector plate 41 and the cathode collector plate 42.

The power supply or load 43 is connected between the anode collector plate 41 and the cathode collector plate 42.

When the apparatus 500 is an electrolyzing apparatus, the power supply 43 is connected between the anode collector plate 41 and the cathode collector plate 42.

When the apparatus 500 is a fuel cell, a load 43 is connected between the anode collector plate 41 and the cathode collector plate 42. The load 43 may be a power converter, a battery, or the like.

The present invention will be described in more detail below based on examples; however, the present invention is not limited to the following examples.

### (Example 1)

An electrochemical cell corresponding to FIG. 25 was fabricated by using the separator 100 of FIG. 1 as the first separator 24 and the second separator 25.

### (Example 2)

An electrochemical cell corresponding to FIG. 25 was fabricated by using the separator 100 of FIG. 1 as the first separator 24.

### (Comparative Example 1)

An electrochemical cell corresponding to FIG. 25 was fabricated by using a separator having the same depth and cross-sectional area for the supply-side connection groove, the branch groove, and the discharge side connection groove as the first separator 24 and the second separator 25.

Electrolysis operation was performed to electrochemically decompose CO₂ to produce CO under the same conditions using the electrochemical cells of Examples 1 to 2 and the electrochemical cell of Comparative Example 1. In all of Examples 1 to 2, gas tended to accumulate less in the separator than in Comparative Example 1, and the rise in cell voltage was diminished even during long-term operation.

Fuel cell operation was performed using methanol as a fuel under the same conditions using the electrochemical cells of Examples 1 to 2 and the electrochemical cell of Comparative Example 1. In all of Examples 1 to 2, gas tended to accumulate less in the separator than in Comparative Example 1, and the decrease in cell voltage was diminished even during long-term operation.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A separator (100) comprising:
a frame (5); and
a flow-channel wall (1A) on the frame (5) , the flow-channel wall (1A) defining a supply-area (2), an exhaust-area (4), and a groove-area (3), the groove-area (3) comprising a first groove group (3A) between the supply-area (2) and the exhaust-area (4), the first groove group (3A) comprising (A) a first supply-side connection groove (3Aa) in which the side of the supply-area (2) has a larger opening than the side of the exhaust-area (4); and (B) a first exhaust-side connection groove (3Ab) in which the side of the exhaust-area (4) has a larger opening than the side of the supply-area (2), wherein
the flow-channel wall (1A) is provided at the exhaust-area side end of the first supply-side connection groove (3Aa), and
the separator (100) satisfies at least one of the following:
(i) a height of the end portion of the flow-channel wall (1A) on the exhaust-area (4) side of the first supply-side connection groove (3Aa) is lower than a height of a portion of the flow-channel wall (1A) that is located between the first supply-side connection groove (3Aa) and the first exhaust-side connection groove (3Ab);
(ii) a thickness of the end portion of the flow-channel wall (1A) on the exhaust-area (4) side of the first supply-side connection groove (3Aa) is thinner than a thickness of the portion of the flow-channel wall (1A) which is located between the first supply-side connection groove (3Aa) and the first exhaust-side connection groove (3Ab);
(iii) the frame (5) on the end side of the first supply-side connection groove (3Aa) on the supply-area side is elevated so that a depth at the end portion of the first supply-side connection groove (3Aa) on the exhaust-area (4) side is shallower than a depth at the end portion of the first supply-side connection groove (3Aa) on the supply-area (2) side;
(iv) the flow-channel wall (1A) located on the end portion of the first supply-side connection groove (3Aa) on the exhaust-area (4) side, has a through hole; and
(v) the flow-channel wall (1A) located on the end portion of the first supply-side connection groove (3Aa) on the exhaust-area (4) side, is split.

2. The separator (100) according to claim 1, wherein
the supply-area (2), the groove-area (3) and the exhaust-area (4) are arranged in a first direction,
the first direction is a longitudinal direction of the first supply-side connection groove (3Aa) and the first exhaust-side connection groove (3Ab),
the groove-area (3) further comprises a second groove group (3B), and
the first groove group (3A) and the second groove group (3B) are arranged in a second direction which is perpendicular to the first direction.

3. The separator (100) according to claim 1, wherein
the height of the end portion of the flow-channel wall (1A) on the exhaust-area (4) side of the first supply-side connection groove (3Aa) is lower than the height of the portion of the flow-channel wall (1A) that is located between the first supply-side connection groove (3Aa) and the first exhaust-side connection groove (3Ab).

4. The separator (100) according to claim 1, wherein
the thickness of the end portion of the flow-channel wall (1A) on the exhaust-area (4) side of the first supply-side connection groove (3Aa) is thinner than the thickness of the portion of the flow-channel wall (1A) which is located between the first supply-side connection groove (3Aa) and the first exhaust-side connection groove (3Ab).

5. The separator (100) according to claim 1, wherein
the frame (5) on the end side of the first supply-side connection groove (3Aa) on the supply-area (2) side is elevated so that the depth at the end portion of the first supply-side connection groove (3Aa) on the exhaust-area (4) side is shallower than the depth at the end portion of the first supply-side connection groove (3Aa) on the supply-area (2) side.

6. The separator (100) according to claim 1, wherein
the flow-channel wall (1A) located on the end portion of the first supply-side connection groove (3Aa) on the exhaust-area (4) side, has the through hole.

7. The separator (100) according to claim 1, wherein
the flow-channel wall (1A) located on the end portion of the first supply-side connection groove (3Aa) on the exhaust-area (4) side, is split.

8. The separator (100) according to claim 1, wherein
a height of the flow-channel wall (1A) provided at the end on the exhaust-area (4) side of the first supply-side connection groove (3Aa) is the lowest height of the flow-channel wall (1A) extending in the second direction at the end on the exhaust-area (4) side of the first supply-side connection groove (3Aa).

9. The separator (100) according to claim 8, wherein
a difference between a height of the flow-channel wall (1A) provided between the first supply-side connection groove (3Aa) and the first exhaust-side connection groove (3Ab) and the height of the flow-channel wall (1A) provided at the end on the exhaust-area (4) side of the first supply-side connection groove (3Aa) is 100 µm or more and 1000 µm or less.

10. The separator (100) according to claim 8 or 9, wherein
the difference between the height of the flow-channel wall (1A) provided between the first supply-side connection groove (3Aa) and the first exhaust-side connection groove (3Ab) and the height of the flow-channel wall (1A) provided at the end on the exhaust-area side of the first supply-side connection groove (3Aa) is 20 % or more and 82 % or less of the height of the flow-channel wall (1A) provided between the first supply-side connection groove (3Aa) and the first exhaust-side connection groove (3Ab).

11. The separator (100) according to claim 2, wherein
a value of a volume per unit length of the groove within a range of 5% length from the exhaust-area (4) side towards the center of its groove in the first direction of the first supply-side connection groove (3Aa) is 10% or more and 50% or less of a value of a volume per unit length of the first supply-side connection groove (3Aa) in the first direction excluding a portion of the first supply-side connection groove (3Aa) within a range of 5% length from the supply-area (2) side towards the center of its groove in the first direction of the first supply-side connection groove (3Aa) and also excluding a portion of the first supply-side connection groove (3Aa) in the first direction, and
the portion where the frame (5) is elevated is in direct contact with the flow-channel wall (1A) extending in the second direction from the end of the exhaust-area (4) side of the first supply-side connection groove (3Aa).

12. The separator (100) according to claim 2, wherein
an area of the opening where the flow-channel wall (1A) opens due to splitting is 25% or more and 50% or less of an area of the flow-channel wall (1A) extending in the second direction from the end on the exhaust-area (4) side of the supply-side connection groove (3Aa) including the opening.

13. The separator (100) according to any one of claims 1 to 12, wherein
a rib is provided in the supply-area (2) or/and the exhaust-area (4).

14. The separator (100) according to any one of claims 1 to 13, wherein
the side opposite to the frame (5) side of the supply-area (2), groove-area (3) and exhaust-area (4) is entirely open.

15. An apparatus (500) comprising an electrochemical cell (300) which comprises a first electrode (21) including a support (21A), a second electrode (22) including a support (22A), a diaphragm (23) between the first electrode (21) and the second electrode (22), a first separator (24) connected to the first electrode (21), and a second separator (25) connected to the second electrode (22), wherein
the first separator (24) and/or the second separator (25) is the separator (100) according to any one of claims 1 to 14, and
the apparatus (500) is an electrolyzing apparatus or a fuel cell.
